# EUROPEAN PATENT SPECIFICATION

(11) **EP 3 686 973 B1**
(45) Date of publication and mention of the grant of the patent: **28.07.2021**
(21) Application number: 19861300.2
(22) Date of filing: 12.09.2019
(51) Int. Cl.: H01M 4/36, H01M 4/133, H01M 4/505, H01M 4/525, H01M 4/04, H01M 10/0525, H01M 10/0567, H01M 10/42

(54) **LITHIUM ION SECONDARY BATTERY**
LITHIUM-IONEN-SEKUNDÄRBATTERIE
BATTERIE SECONDAIRE AU LITHIUM-ION

(30) Priority: 28.11.2018 CN 201811433543
(43) Date of publication of application: 29.07.2020
(73) Proprietor: Contemporary Amperex Technology Co., Limited, Jiaocheng District Ningde City, Fujian 352100 (CN)
(72) Inventor: LI, Zhiqiang, Ningde Fujian 352100 (CN); HAN, Changlong, Ningde Fujian 352100 (CN)
(74) Representative: Boult Wade Tennant LLP
(86) International application number: PCT/CN2019/105730
(87) International publication number: WO 2020/108014

(56) References cited:
- EP-A1- 0 749 173
- CN-A- 102 593 416
- CN-A- 102 610 859
- CN-A- 107 112 526
- JP-A- 2002 164 049
- US-A1- 2014 342 230
- L. MADEC ET AL: "Mechanism of action of ethylene sulfite and vinylene carbonate electrolyte additives in LiNi 1/3 Mn 1/3 Co 1/3 O 2 /graphite pouch cells: electrochemical, GC-MS and XPS analysis", PHYSICAL CHEMISTRY CHEMICAL PHYSICS, vol. 17, no. 40, 22 September 2015 (2015-09-22), pages 27062-27076, XP055427599, ISSN: 1463-9076, DOI: 10.1039/C5CP04221F & L. MADEC ET AL: "Mechanism of action of ethylene sulfite and vinylene carbonate electrolyte additives in LiNi1/3Mn1/3Co1/3O2/graphite pouch cells: electrochemical, GC-MS and XPS analysis", , 22 September 2015 (2015-09-22), XP055741982, Retrieved from the Internet: URL:http://www.rsc.org/suppdata/c5/cp/c5cp 04221f/c5cp04221f1.pdf [retrieved on 2020-10-20]
- M Nie ET AL: "Role of Lithium Salt on Solid Electrolyte Interface (SEI) Formation and Structure in Lithium Ion Batteries", Journal of the Electrochemical Society, 1 May 2014 (2014-05-01), pages A1001-A1006, XP055149326, DOI: 10.1149/2.054406jes Retrieved from the Internet: URL:http://jes.ecsdl.org/content/161/6/A10 01.full.pdf [retrieved on 2020-10-20]

## Description

### TECHNICAL FIELD

The present application pertains to the field of battery technology, and in particular relates to a lithium ion secondary battery.

### BACKGROUND

Lithium-ion secondary batteries can provide stable voltage and current, have a high-voltage platform, high energy density, and a wide temperature range, have no memory effect, and are environment-friendly and easy to carry. Therefore, they are widely used in various consumer electronics, electric vehicles, and mechanical equipment. In recent years, there have been increasing demands on safety performance and cycle performance of lithium-ion secondary batteries.

### SUMMARY

It was found by the inventors that safety performance of lithium ion secondary batteries can be improved by using a positive active material containing a manganese element. However, manganese contained in the positive electrode easily undergoes disproportionation. The generated manganese ions are dissolved in electrolyte and migrate to a negative electrode, undergo an ion exchange reaction with lithium in the negative electrode, occupy a lithium-intercalated position of the negative electrode, and are not easy to come out. As a result, lithium storage capacity of the negative electrode is reduced. In addition, the lithium ions released by the ion exchange reaction can no longer participate in a lithium de-intercalation reaction between the positive and negative electrodes, resulting in capacity loss. Therefore, application of a manganese element will deteriorate cycle performance and storage performance of lithium ion secondary batteries, especially at high temperatures (above 40°C).

The present inventors have conducted a lot of research to decrease the negative effect of a positive active material containing a manganese element on negative electrode of lithium ion secondary batteries and improve stability of negative electrode, thereby providing lithium-ion secondary batteries with higher safety performance, cycle performance and storage performance.

Therefore, in accordance with a first aspect of the present invention, there is provided a lithium ion secondary battery in accordance with claim 1:

A second aspect of the present application resides in a lithium ion secondary battery in accordance with claim 9:

The lithium ion secondary battery as provided by the present application comprises a lithium manganese-based positive active material. The lithium manganese-based positive active material has higher structural stability, which reduces the release of oxygen from a positive electrode active material due to decomposition. In addition, the lithium manganese-based positive active material has low oxidation activity to electrolyte, which can reduce side reactions of electrolyte on the surface of positive active material, suppress gas generation, and reduce heat generation. Therefore, the use of a lithium manganese-based positive active material can reduce the risk of runaway of lithium ion secondary batteries, and allow lithium ion secondary batteries have higher safety performance. Meanwhile, a negative active material layer and/or electrolyte comprise a sulfur-containing compound so that the sulfur-containing compound forms a stable sulfur-containing solid electrolyte interface film in the negative active material layer, and the mass percentage v of the sulfur element present in the negative active material layer containing the interface film and the mass percentage u of manganese element present in the positive active material satisfy the following formula: v = 0.018u + ω. The interface film can effectively block the dissolved manganese ions from positive active material from entering negative active material, and significantly reduce ion exchange of the manganese ions with lithium in negative electrode, thereby suppressing destruction of negative electrode due to the manganese element and improving stability of negative electrode. Therefore, the capacity retention of the lithium ion secondary batteries during cycle and storage stages is improved, so that the lithium ion secondary batteries exhibits both high cycle performance and storage performance, and they can also have high safety performance, cycle performance and storage performance at elevated temperature.

### DETAILED DESCRIPTION

In order to make the object, technical solution, and technical effects of the present application apparent, the following further describes the present application in detail with reference to the embodiments. It should be understood that the embodiments described in the present description are only for explaining the present application, and are not intended to limit the application.

For the sake of brevity, only certain ranges are explicitly disclosed herein. However, ranges from any lower limit may be combined with any upper limit to recite a range not explicitly recited, ranges from any lower limit may be combined with any other lower limit to recite a range not explicitly recited, and in the same way, ranges from any upper limit may be combined with any other upper limit to recite a range not explicitly recited. Additionally, within a range includes every point or individual value between its end points even though not explicitly recited. Thus, every point or individual value may serve as its own lower or upper limit combined with any other point or individual value or any other lower or upper limit, to recite a range not explicitly recited.

In the description herein, it should be noted that, unless otherwise stated, the recitation of numerical ranges by "above" and "below" include all numbers within that range including the endpoints. As used herein, "a", "an", "the", "at least one", and "one or more" are used interchangeably, unless indicated otherwise and the recitation of "more" in the phrase "one or more" includes two or more.

The above summary of the present application is not intended to describe each disclosed embodiment or every implementation in this application. The following description illustrates exemplary embodiments more specifically. In many places throughout the application, guidance is provided through a series of examples, which can be used in various combinations. In each instance, the enumeration is only a representative group and should not be interpreted as exhaustive.

According to embodiments of the present application, a lithium ion secondary battery is provided, comprising a positive electrode plate, a negative electrode plate, a separator, and an electrolyte.

The positive electrode plate includes a positive current collector and a positive active material layer disposed on at least one surface of the positive current collector. For example, the positive current collector has two opposite surfaces along the thickness direction of the positive current collector, and the positive active material layer is laminated on one or both of the two surfaces of the positive current collector. The positive active material layer comprises a positive active material.

The negative electrode plate includes a negative current collector and a negative active material layer disposed on at least one surface of the negative current collector. For example, the negative current collector has two opposite surfaces along the thickness direction of the negative current collector, and the negative active material layer is laminated on one or both of the two surfaces of the negative current collector. The negative active material layer comprises a negative active material.

The electrolyte comprises a solvent and a lithium salt dissolved in the solvent.

The positive plate and the negative plate each are alternately stacked, and the separator is provided between the positive plate and the negative plate to separate the positive plate from the negative plate, thereby forming a battery core, optionally after winding. The battery core is placed in a case in which an electrolyte is injected, and then the case is sealed, thereby obtaining a lithium ion secondary battery.

The positive active material comprises a lithium manganese-based positive active material. In addition, the negative active material layer and/or electrolyte comprises a sulfur-containing compound. During the battery charging and discharging process, the sulfur-containing compound forms a sulfur-containing solid electrolyte interface film in the negative active material layer, and the mass percentage v of the sulfur element present in the negative active material layer containing the interface film and the mass percentage u of the manganese element present in the positive active material satisfy the following formula: v = 0.018u + ω, in which u and v both are in wt% and ω is 0.01 ∼ 2.

The mass percentage v of the sulfur element present in the negative electrode active material layer containing the interface film can be quantitatively analyzed by Scanning Electron Microscope-Energy Dispersive Spectrometer (SEM-EDS) at an acceleration voltage of 20 kV. The analytical method can be performed in accordance with GB/T 17359-2012 "Quantitative Analysis by Microbeam Analysis Spectroscopy". As an example, the mass percentage v of the sulfur element present in the negative electrode active material layer is determined by following procedures: disassembling a lithium ion secondary battery, cutting a 3mm × 3mm negative electrode plate, and pasting it on a sample stage of SEM-EDS so that the surface of the negative active material layer facing away from the negative current collector is positioned upward, and there is a negative electrode active material layer in the test region of the sample stage; after that, placing the sample stage carrying the negative electrode plate in a sample chamber of the SEM-EDS, applying vacuum to 5 × 10⁻⁵ mbar, and performing an area scan at an acceleration voltage of 20 kV to measure the mass percentage v of the sulfur element present in the negative active material layer.

In some cases, the superfacial layer of the negative active material layer is detected by the SEM-EDS at an acceleration voltage of 20 kV. The mass percentage of the sulfur element present in the superficial layer of the negative electrode active material layer is substantially equal to the mass percentage v of the sulfur element present in the negative electrode active material layer. The term "substantially" means that a difference within ± 10% is allowed.

Herein, v = 0.018u + ω is calculated by numerical values themselves. For example, if the mass percentage u of the manganese element present in the positive active material is 25wt% and ω is 0.2, then v = 0.018 × 25 + 0.2 = 0.65. That is, the mass percentage v of the sulfur element present in the negative active material layer containing the interface film is 0.65 wt%.

According to embodiments of the present application, the lithium ion secondary battery comprises a lithium manganese-based positive active material. The lithium manganese-based positive active material has higher structural stability, which reduces the release of oxygen from positive electrode active material due to decomposition. In addition, the lithium manganese-based positive active material has low oxidation activity to electrolyte, which can reduce side reactions of electrolyte on the surface of positive active material, suppress gas generation, and reduce heat generation. Therefore, the use of a lithium manganese-based positive active material can reduce the risk of runaway of lithium ion secondary batteries, and allow the lithium ion secondary batteries have higher safety performance.

The negative active material layer and/or electrolyte comprise a sulfur-containing compound. The sulfur-containing compound forms a stable sulfur-containing solid electrolyte interface film in the negative active material layer, and the mass percentage content v of the sulfur element present in the negative active material layer containing the interface film and the mass percentage u of the manganese element present in the positive active material satisfy the following formula: v = 0.018u + ω. The interface film has good lithium ion conductivity and electronic insulation, and can form an effective physical isolation against manganese eluted from the positive electrode, and the sulfur element contained in the interface film can also undergo complexation reaction with manganese ions. The interface film can effectively block the eluted manganese ions from positive active material from entering negative active material, and significantly reduce the ion exchange of the manganese ions with lithium in negative electrode, thereby suppressing destruction of negative electrode due to the manganese element and improving stability of negative electrode. Therefore, the capacity retention of the lithium ion secondary batteries during cycle and storage stages is improved, so that the lithium ion secondary batteries exhibit both high cycle performance and storage performance.

Therefore, the lithium ion secondary batteries according to embodiments of the present application exhibit high safety performance, cycle performance and storage performance, even at elevated temperature.

In some embodiments, the sulfur-containing compound is preferably one or more of a sulfonate, a sulfate, and a sulfite. The sulfur-containing compound can improve the composition and structure of the interface film and make the interface film exhibiting the above effects more effectively, thereby further improving the cycle performance and storage performance of lithium ion secondary batteries.

Further preferably, the sulfur-containing compound is selected from one or more of 1,3-propane sultone (1,3-PS), ethylene sulfate (DTD), methylene methanedisulfonate (MMDS), 1-propene-1,3-sultone (PST), 4-methyl ethylenesulfate (PCS), 4-ethyl ethylenesulfate (PES), 4-propyl ethylene Sulfate (PEGLST), propylene sulfate (TS), 1,4-butanesultone (1,4-BS), ethylene sulfite (DTO), dimethyl sulfite (DMS) and diethyl sulfite (DES).

It can be understood that, as long as the mass percentage v of the sulfur element present in the negative active material layer containing interface film and the mass percentage u of the manganese element present in positive active material satisfy the above relationship, the above sulfur-containing compound is required to be added to an electrolyte alone, and it is not necessary to be added to the negative active material layer. In this case, the sulfur-containing compound is present in an amount of 0.2 wt% to 9 wt% in the electrolyte. During the first charge and discharge cycle of batteries, the sulfur-containing compound in the electrolyte forms the aforementioned interface film on the negative active material layer.

The above-mentioned sulfur-containing compound may be incorporated in the negative active material layer alone, and may not be added to the electrolyte. In this case, the sulfur-containing compound is present in an amount of 0.2 wt% to 2 wt% in the negative active material layer. After an electrolyte is injected into batteries, and the electrolyte is infiltrated into the negative active material layer, the sulfur-containing compound will forms the aforementioned interface film on the negative active material layer during the first charge and discharge cycle of batteries.

The above-mentioned sulfur-containing compound may be incorporated in the electrolyte and negative active material layer both.

In addition, in order to ensure a low electrolyte resistance, the sulfur-containing compound is preferably present in an amount of 2.5% by weight or less in the electrolyte.

In order to ensure a low negative active material layer resistance, the sulfur-containing compound is preferably present in an amount of 2% by weight or less in the negative active material layer.

On preparing an electrolyte comprising a sulfur-containing compound, it may be obtained by mixing the sulfur-containing compound with a solvent and a lithium salt uniformly, and the addition order of ingredients is not specifically limited.

On preparing a negative active material layer comprising a sulfur-containing compound, it may be obtained by dispersing a sulfur-containing compound and a negative active material in a solvent and mixing them uniformly to form a negative slurry in which the sulfur-containing compound is dispersed; after that applying the negative slurry to a negative current collector followed by drying and cold pressing to obtain a negative electrode plate, in which the sulfur-containing compound is substantially uniformly dispersed in the negative active material layer, for example.

As an another example, the sulfur-containing compound is used as a negative coating agent or its key component and it is applied to the surface of the negative active material layer and then dried, thereby obtaining the negative active material layer comprising a sulfur compound.

For example, a negative active material is dispersed in a solvent to form a uniform negative slurry; the negative slurry is then applied on the negative current collector to obtain a wet negative active material coating; and then the negative coating agent is applied on the wet negative active material coating followed by drying and cold pressing, so that a negative active material layer containing a sulfur-containing compound is obtained.

Of course, it is also possible to dry the negative active material coating, and then the negative coating agent is applied to the dried negative active material coating followed by drying and cold pressing, so that a negative active material layer containing a sulfur-containing compound is obtained.

Alternatively, it is also possible to dry and cold-press the negative active material coating first to obtain a negative active material layer, and then the negative coating agent is applied to the negative active material layer followed by dying again, so that a negative active material layer containing a sulfur-containing compound is obtained.

In order to prevent the sulfur-containing compound from being decomposed, the temperature at which the negative coating agent is dried may be 100°C or lower, for example, in the range of 75°C to 85°C.

During the application and drying process of the negative coating agent, a part of negative coating agent will penetrate into the negative active material layer, so that the sulfur-containing compound is dispersed inside the negative active material layer. Preferably, the negative coating agent is applied to the wet negative active material coating, which would be favorable to better allow the negative coating agent penetrate into the negative active material coating, so that the sulfur-containing compound is more uniformly dispersed in the negative active material layer, and which is beneficial to reduce the negative electrode resistance.

When a sulfur-containing component is used as a key component of the negative coating agent, for example, the negative coating agent may be formed by for example uniformly dispersing the sulfur-containing component in a solvent; or by for example, dispersing the sulfur-containing compound, a conductive agent, and a binder in a solvent, in which the conductive agent and the binder are any conductive agent and binder (described in detail below) that can be used for negative active material layer. The negative coating agent may flow properly, thus it is convenient to obtain a film layer in which the sulfur-containing compound is dispersed more evenly.

A solvent for the negative coating agent is, for example, one or two of deionized water and N-methylpyrrolidone (NMP), which can be selected according to the solvent for the negative slurry. For example, when deionized water is used as a solvent of negative slurry, the solvent for negative coating agent is deionized water. For example, when N-methylpyrrolidone is used as a solvent for the negative slurry, the solvent for negative coating agent is N-methylpyrrolidone.

Preferably, the sulfur-containing compound is present in an amount of 40 wt% to 75 wt%, for example, 60 wt% to 75 wt% in the negative coating agent.

When the negative coating agent further contains a conductive agent and a binder, the conductive agent is present in an amount of 0.5 wt% to 5 wt%, for example, 1 wt% to 2 wt% in the negative electrode coating agent; the binder is present in an amount of 0.5 wt% to 5 wt%, for example, 1 wt% to 2 wt% in the negative coating agent.

In some embodiments, it is also possible to encapsulate the negative active material to simulate the above-mentioned sulfur-containing solid electrolyte interface film, and an artificial solid electrolyte interface film containing sulfur element may be formed on the surface of the negative active material, which can also protect negative electrode, suppress the destruction of negative electrode due to manganese ions eluted from positive electrode, and improve the cycle performance and storage performance of batteries.

The type of the negative active material is not specifically limited in the present application, and can be selected according to actual demands. As an example, the negative electrode active material may be one or more of natural graphite, artificial graphite, mesophase micro carbon sphere (MCMB), hard carbon, soft carbon, silicon, silicon-carbon composite, SiO, Li-Sn alloy, Li-Sn-O alloy, Sn, SnO, SnO2, lithium titanate Li₄Ti₅O₁₂ withspinel structure, Li-Al alloy and metallic lithium.

The negative active material layer may further comprise a conductive agent and a binder. In the present application, the types of the conductive agent and the binder in the negative active material layer are not specifically limited, and can be selected according to actual demands. As an example, the conductive agent may be one or more of graphite, superconducting carbon, acetylene black, carbon black, ketjen black, carbon dots, carbon nanotubes, graphene, and carbon nanofibers; the binder may be one or more of butyl styrene rubber (SBR), polyvinylidene fluoride (PVDF), polytetrafluoroethylene (PTFE), polyvinyl butyral (PVB), water-based acrylic resin, and carboxymethyl cellulose (CMC).

The negative active material layer may optionally further comprise a thickener such as carboxymethyl cellulose (CMC).

The negative active material layer has a compaction density of 1.3g/cm³ to 1.65g/cm³. Using the negative electrode active material layer with a compaction density of 1.3g/cm³ to 1.65g/cm³, the diffusion rate of manganese ions in the negative active material layer is low, so that the ion exchange of manganese ions with lithium in positive electrode is reduced, thereby suppressing the destruction of manganese to negative electrode plate and improving the stability of negative electrode plate.

The negative current collector can be made of a metal foil or a porous metal sheet, for example, a foil or a porous plate using a metal such as copper, nickel, titanium, or iron, or an alloy thereof, such as copper foil.

According to the lithium ion secondary battery of embodiments of the present application, the lithium manganese-based positive active material as the positive active material is, for example, LiMn₂O₄, LiNiₘCoₙMnₗ₋ₘ₋ₙO₂(0<m<1, 0≤n<1, 0<m+n<1) and the like.

In some preferred embodiments, the positive active material comprises a first positive active material and a second positive active material.

The first positive active material is a compound represented by formula (1),

Li₁₊ₓNiₐCo_{b}M_{l-a-b}O_{2-y}A_{y} (1)

in which formula (1), -0.1≤x≤0.2, 0 <a <1, 0≤b <1, 0 <a + b <1, 0≤y <0.2, M is one or more of Mn, Fe, Cr, Ti, Zn, V, Al, Zr, and Ce, and A comprises one or more of S, N, F, Cl, Br, and I.

The second positive active material is a compound represented by formula (2),

Li_{1+z}Mn_{c}M'_{2-c}O_{4-d}A'_{d} (2)

in which formula (2), -0.1≤z≤0.2, 0<c≤2, 0≤d <1, M' comprises one or more of Ni, Fe, Cr, Ti, Zn, V, Al, Mg, Zr, and Ce, and A' comprises one or more of S, N, F, Cl, Br, and I.

The positive active material comprises a first positive active material and a second positive active material, which can effectively exert a synergistic effect between the first positive active material and the second positive active material. The second positive active material can reduce the release of oxygen from the first positive active material due to decomposition, decrease the oxidation activity of the first positive active material to electrolyte, and increase the stability of positive electrode plate, thereby reducing the risk of runaway of lithium ion secondary batteries, and allowing the lithium ion secondary batteries have higher safety performance. Meanwhile, the second positive active material can also reduce the polarization of the first positive active material. Especially, the first positive active material can reduce elution of manganese ions from the second positive active material and further reduce the polarization of positive electrode plate. This reduces the capacity loss due to polarization, thereby increasing the capacity retention of lithium ion secondary batteries during cycle and storage stages, and improving the cycle performance and storage performance of lithium ion secondary batteries. The positive active material also enables the lithium ion secondary batteries to have a higher voltage platform and energy density.

It is further preferred that the first positive active material of formula (1) wherein 0.5≤a <1, 0<b <0.5, 0.7≤a + b <1, 0≤y <0.1, M is one or two of Mn and Al, and A is one or two of S or F further increases the energy density of lithium ion secondary batteries.

Further, the first positive active material to the second positive active material are present in the positive electrode active material in a mass ratio of preferably 28:72 to 99.5: 0.5, further preferably 3: 7 to 99.5: 0.5, and more preferably 35:65 to 95: 5. A suitable mass ratio of the first positive active material and the second positive active material may better exert the synergistic effect between the first positive active material and the second positive active material.

Preferably, the manganese element is present in an amount of 6 wt% to 45 wt% in the positive active material. This can better improve safety performance of lithium ion secondary batteries, while ensuring that the lithium ion secondary batteries has a higher specific energy.

In addition, the positive active material layer may further include a conductive agent and a binder. The types of the conductive agent and the binder in the positive active material layer are not limited specifically in the present application, and may be selected according to actual demands. As an example, the conductive agent may be one or more of graphite, superconducting carbon, acetylene black, carbon black, ketjen black, carbon dots, carbon nanotubes, graphene, and carbon nanofibers; the binder may be one or more of styrene-butadiene rubber (SBR), water-based acrylic resin, carboxymethyl cellulose (CMC), polyvinylidene fluoride (PVDF), polytetrafluoroethylene (PTFE), polyvinyl butyral (PVB), ethylene-vinyl acetate copolymer (EVA) and polyvinyl alcohol (PVA).

In some optional embodiments, the conductive agent and the positive active material are present in the positive active material layer in a mass ratio of is 1.5: 95.5 or more, and the binder is present in the positive active material layer in an amount of 2 wt% or less. By making the content of the conductive agent and the binder in the positive active material layer within a predetermined range, it is beneficial for the positive active material to be fully encapsulated by the conductive agent, forming a uniform and rapid electron transport network, thereby improving rate performance and cycle performance of the lithium ion secondary batteries.

The positive electrode active material layer has a compaction density in the range of 3.0g/cm³ to 3.6 g/cm³. This makes the porosity inside the positive active material layer lower at a certain thickness of the positive electrode plate, which is beneficial to reducing the elution rate of manganese ions from positive active material, thereby improving the cycle performance and storage performance of the batteries. The positive active material layer also enables the batteries to have a high reversible capacity.

The positive current collector may be a metal foil or a porous metal sheet, for example, a foil or a porous sheet made of a metal such as aluminum, copper, nickel, titanium, or silver, or an alloy thereof, such as aluminum foil.

In the electrolyte of the lithium ion secondary batteries according to embodiments of the present application, the solvent may be a non-aqueous organic solvent, such as one or more of ethylene carbonate (EC), propylene carbonate (PC), ethyl methyl carbonate (EMC), diethyl carbonate (DEC), dimethyl carbonate (DMC), dipropyl carbonate (DPC), methylpropyl carbonate (MPC), ethylpropyl carbonate (EPC), methyl formate (MF), methyl acetate (MA), ethyl acetate (EA), propyl acetate (PA), methyl propionate (MP), ethyl propionate (EP), propyl propionate (PP), methyl butyrate (MB), and ethyl butyrate (EB), preferably two or more of them.

In the electrolyte, the lithium salt can be selected from one or more of LiPF₆ (lithium hexafluorophosphate), LiBF₄ (lithium tetrafluoroborate), LiClO₄ (lithium perchlorate), LiAsF₆ (lithium hexafluoroarsenate), LiFSI (lithium bisfluorosulfonimide), LiTFSI (lithium bistrifluoromethanesulfonimide), LiTFS (lithium triflate), LiDFOB (lithium difluorooxalate borate), LiBOB (lithium bisoxalate borate), LiPO₂F₂ (lithium difluorophosphate), LiDFOP (lithium difluorooxalatophosphate) and LiTFOP (lithium tetrafluorooxalatophosphate), such as one or more of LiPF₆ (lithium hexafluorophosphate), LiBF₄ (lithium tetrafluoroborate), LiBOB (lithium bisoxalateborate), LiDFOB (lithium difluorooxalate borate), LiTFSI (lithium bistrifluoromethanesulfonimide), and LiFSI (lithium bisfluorosulfonimide).

Further, the electrolyte may further contain a fluorine-containing lithium salt as an additive. The fluoride-containing lithium salt additive can effectively control the increase in impedance caused by the formation of the negative electrode interface film, and ensure that the lithium ion secondary batteries have a lower internal resistance, thereby enabling the lithium ion secondary batteries to have higher cycle performance and storage performance while keeping higher dynamic performance and rate performance.

Preferably, the fluorine-containing lithium salt additive may be selected from one or more of lithium difluorophosphate LiPO₂F₂, lithium difluorooxalate phosphate LiDFOP, lithium tetrafluoroborate LiBF₄, and lithium difluorooxalate borate LiDFOB.

Further preferably, the fluorine-containing lithium salt as additive is present in the electrolyte in an amount of 0.05 wt% to 1.5 wt%.

It should be understood that lithium difluorophosphate LiPO₂F₂, lithium difluorooxalatophosphate LiDFOP, lithium tetrafluoroborate LiBF₄, and lithium difluorooxalatoborate LiDFOB can be used as the electrolyte lithium salts and the fluorine-containing lithium salt-type additive both. It is only required to ensure that the fluorine-containing lithium salt-type additive is present in a predetermined amount so that the fluoride-containing lithium salt additive can effectively control the increase in impedance caused by the formation of negative electrode interface film.

The electrolyte may also optionally comprise other additives, such as one or more of vinylene carbonate (VC), vinyl ethylene carbonate (VEC), fluoroethylene carbonate (FEC), difluoroethylene carbonate (DFEC), trifluoromethylethylene carbonate (TFPC), succinonitrile (SN), adiponitrile (ADN), glutaronitrile (GLN), hexanetrinitrile (HTN), sulfonate cyclic quaternary ammonium salt, tri(trimethylsilyl) phosphate (TMSP) and tris (trimethylsilyl) borate (TMSB).

There is no particular limitation on the separator in the lithium ion secondary batteries according to embodiments of the present application, and any well-known porous structure separator having electrochemical stability and chemical stability can be selected. For example, the separator may be a single-layer or multi-layer film selected from one or more of glass fiber, non-woven fabric, polyethylene (PE), polypropylene (PP), and polyvinylidene fluoride (PVDF).

The lithium ion secondary battery according to embodiments of the present application may be manufactured easily and thus is suitable for industrial production.

### Examples

Unless otherwise stated, all parts, percentages, and ratios reported in the following examples are based on weight, and all reagents used in the examples are commercially available or synthesized by conventional methods, and can be directly obtained without further treatment, and the instruments used in the examples are commercially available.

### Example 1

### Preparation of positive electrode plate

A positive electrode plate was prepared as follows: LiNi_{0.8}Co_{0.1}Mn_{0.1}O₂ as a first positive active material, LiMn₂O₄ as a second positive active material, conductive carbon black SP and PVDF as a binder in which the mass ratio of LiNi_{0.8}Co_{0.1}Mn_{0.1}O₂, to LiMn₂O₄ was 65:35, and in which the mass ratio of the combined positive electrode active materials, the conductive carbon black, and PVDF was 96: 2: 2 were dispersed in NMP and mixed uniformly, to form a positive slurry. And then the slurry was coated on the surface of a positive current collector in the form of aluminum foil, followed by drying, cold-pressing, slitting and cutting, thereby obtaining the positive electrode plate.

### Preparation of negative electrode plate

A negative electrode plate was prepared as follows: graphite as a negative electrode active material, conductive carbon black SP, CMC as a thickener and SBR as a binder were dispersed in deionized water at a mass ratio of 96: 1: 1:2 and mixed uniformly to obtain a negative slurry. And then the slurry was coated on the surface of a negative current collector in the form of copper foil, followed by drying, cold-pressing, slitting and cutting, thereby obtaining the negative electrode plate.

### Preparation of electrolyte

Ethylene carbonate (EC), ethyl methyl carbonate (EMC), and diethyl carbonate (DEC) were mixed at a mass ratio of 30:30:40 to obtain an organic solvent, followed by dissolving LiPF₆ at a concentration of 1 mol/L and 1 wt% of DTD into the solvent to prepare an electrolyte.

### Preparation of battery

PP/PE/PP was used as a separator, and the positive electrode plate, the separator and the negative electrode plate were stacked in order, and then the stack was wound into a bare battery core. The battery core was put into a soft case followed by sealing at the top side and infusing with the electrolyte, thereby forming a soft case battery.

### Example 2

The battery of example 2 was prepared with the same procedure as in example 1 except that 1 wt% of 1,3-PS was added to the electrolyte instead of DTD.

### Example 3

The battery of example 3 was prepared with the same procedure as in example 1 except that 1 wt% of MMDS was added to the electrolyte instead of DTD.

### Example 4

The battery of example 4 was prepared with the same procedure as in example 1 except that 1 wt% of PST was added to the electrolyte instead of DTD.

### Example 5

The battery of example 5 was prepared with the same procedure as in example 1 except that 1 wt% of PCS was added to the electrolyte instead of DTD.

### Example 6

The battery of example 6 was prepared with the same procedure as in example 1 except that 1 wt% of PES was added to the electrolyte instead of DTD.

### Example 7

The battery of example 7 was prepared with the same procedure as in example 1 except that 1 wt% of PEGLST was added to the electrolyte instead of DTD.

### Example 8

The battery of example 8 was prepared with the same procedure as in example 1 except that 1 wt% of TS was added to the electrolyte instead of DTD.

### Example 9

The battery of example 9 was prepared with the same procedure as in example 1 except that 1 wt% of 1,4-BS was added to the electrolyte instead of DTD.

### Example 10

The battery of example 10 was prepared with the same procedure as in example 1 except that 1 wt% of DTO was added to the electrolyte instead of DTD.

### Example 11

The battery of example 11 was prepared with the same procedure as in example 1 except that 1 wt% of DMS was added to the electrolyte instead of DTD.

### Example 12

The battery of example 12 was prepared with the same procedure as in example 1 except that 1 wt% of DES was added to the electrolyte instead of DTD.

### Example 13

The battery of example 13 was prepared with the same procedure as in example 1 except that no DTD was added to the electrolyte; and 0.8 wt% TS was added to the negative slurry.

### Example 14

The battery of example 14 was prepared with the same procedure as in example 13 except that no TS was added to the negative electrode slurry and TS was added in such a way that TS, SP, and PVDF were dispersed into NMP at a mass ratio of 96: 2: 2 and mixed uniformly to obtain a negative coating agent in which the total mass percentage of TS, SP, and PVDF wass 70 wt% and that the negative coating agent was coated on the surface of negative active material layer with a coating thickness not greater than 3 µm.

### Example 15

The battery of example 15 was prepared with the same procedure as in example 1 except that 0.2 wt% of PST was added to the electrolyte instead of DTD.

### Example 16

The battery of example 16 was prepared with the same procedure as in example 1 except that 9 wt% of PST was added to the electrolyte instead of DTD.

### Example 17

The battery of example 17 was prepared with the same procedure as in example 1 except that the mass ratio of LiNi_{0.8}Co_{0.1}Mn_{0.1}O₂, to LiMn₂O₄was99.5:0.5 and 0.4 wt% of MMDS was added to the electrolyte instead of DTD.

### Example 18

The battery of example 18 was prepared with the same procedure as in example 1 except that the mass ratio of LiNi_{0.8}Co_{0.1}Mn_{0.1}O₂, to LiMn₂O₄was28:725 and 2.5 wt% of MMDS was added to the electrolyte instead of DTD.

### Example 19

The battery of example 19 was prepared with the same procedure as in example 1 except that the mass ratio of LiNi_{0.8}Co_{0.1}Mn_{0.1}O₂, to LiMn₂O₄was72.5/27.5, no DTD was added to the electrolyte and 1 wt% of TS was added to the negative slurry.

### Example 20

The battery of example 20 was prepared with the same procedure as in example 1 except that the mass ratio of LiNi_{0.8}Co_{0.1}Mn_{0.1}O₂, to LiMn₂O₄was82.5/17.5, no DTD was added to the electrolyte and 1 wt% of TS was added to the negative slurry.

### Example 21

The battery of example 21 was prepared with the same procedure as in example 1 except that the mass ratio of LiNi_{0.8}Co_{0.1}Mn_{0.1}O₂, to LiMn₂O₄was86.5/13.5, no DTD was added to the electrolyte and 1 wt% of TS was added to the negative slurry.

### Example 22

The battery of example 22 was prepared with the same procedure as in example 1 except that 0.1 wt% of LDFOP was further added to the electrolyte.

### Comparative Example 1

The battery of comparative example 1 was prepared with the same procedure as in example 1 except that no DTD was added to the electrolyte.

### Comparative Example 2

The battery of comparative example 2 was prepared with the same procedure as in example 1 except that 0.15 wt% of PST was added to the electrolyte.

### Comparative Example 3

The battery of comparative example 3 was prepared with the same procedure as in example 1 except that 9.5 wt% of PST was added to the electrolyte.

### TEST METHOD

### High-temperature cycle performance test for lithium ion secondary batteries

At 45°C, the fresh lithium ion secondary batteries were left for 5 minutes, charged at a constant current of 1C to 4.2V, and then charged at a constant voltage until the current was less than or equal to 0.05C. After that, the charged batteries were left for 5 minutes and then discharged at a constant current of 1C to 3.0V. The resulting discharge capacity was recorded as the discharge capacity after the first cycle. These lithium ion secondary batteries were subjected to a 400-cycle charge-discharge test following the procedure described above, and the discharge capacity after each cycle was recorded.

Capacity retention (%) of lithium ion secondary battery after 400 cycles of 1C/1C at 45°C = the discharge capacity after the 400th cycle / the discharge capacity after the first cycle × 100%.

### High temperature storage performance test for lithium ion secondary battery

At 25 °C, the fresh lithium ion secondary batteries prepared in the examples and comparative examples were left for 5 minutes, charged at a constant current of 1C to 4.2V, and then charged at a constant voltage until the current was less than or equal to 0.05C. After that, the charged batteries were left for 5 minutes and then discharged at a constant current of 1C to 3.0V. The resulting discharge capacity was recorded as the initial discharge capacity.

At 25 °C, the above lithium ion secondary batteries were further left for 5 minutes, charged at a constant current of 1C to 4.2V, and then charged at a constant voltage until the current was less than or equal to 0.05C. After that, the charged batteries were left for 5 minutes and then the lithium ion secondary batteries in the fully charged state were stored in an oven at 60 ° C for 30 days.

After the high-temperature storage, the lithium ion secondary batteries were removed and then naturally cooled down to 25 ° C. The cooled lithium ion secondary batteries were left for 5 minutes, and then charged at a constant current of 1C to 4.2V, and then charged at a constant voltage until the current was less than or equal to 0.05C. After that, the charged batteries were left for 5 minutes and then discharged at a constant current of 1C to 3.0V. The resulting discharge capacity was recorded as the discharge capacity after high-temperature storage for 30 days.

Capacity retention (%)of lithium ion secondary battery after high temperature storage for 30 days = the discharge capacity after high temperature storage for 30 days / the initial discharge capacity × 100%.

### Thermal shock test for lithium ion secondary battery

At 25 ° C, the fresh lithium ion secondary batteries prepared in the examples and comparative examples were left for 5 minutes, charged at a constant current of 1C to 4.2V, and then charged at a constant voltage until the current was less than or equal to 0.05C. After that, the batteries were left for 5 minutes, and then placed in an oven. The temperature of the oven was set to rise from 25°C to 130°C at a temperature increase rate of 2°C/min, and the temperature at 130°C was maintained for 2 hours. During the heating and constant process, the batteries were monitored in terms of their surface temperature and phenomenon.

### DC resistance test for lithium ion secondary battery

At 25 ° C, the fresh lithium ion secondary batteries prepared in the examples and comparative examples were left for 5 minutes, charged at a constant current of 1C to 4.2V, and then charged at a constant voltage until the current was less than or equal to 0.05C. After that, the batteries were left for 5 minutes, and then discharged at a constant current rate of 1C so that the state of charge (SOC) of the lithium ion secondary batteries was adjusted to 50%.

The lithium ion secondary batteries with a 50% SOC were left for 10 minutes and the voltage at the last second was recorded as Voltage U1. And the lithium ion secondary batteries were discharged at a constant current of 4C for 30 seconds, the voltage and current at the last second were recorded as Voltage U2 and Current I.

The lithium ion secondary batteries with a 50% SOC discharged at a constant current of 4C for 30 seconds at 25°C has a DC resistance of (U2-U1)/I.

### Determination of sulfur content of negative electrode active material layer

Scanning Electron Microscope-Energy Dispersive Spectrometer (SEM-EDS) was used in accordance with GB/T 17359-2012 "Microbeam Analysis and Quantitative Analysis by Spectroscopy".

The lithium ion secondary batteries to be tested were disassembled and then a 3 mm × 3 mm negative electrode plate was cut, which was attached to the sample stage of the SEM-EDS so that the surface of the negative active material layer facing away from the negative current collector was positioned upward, and there was a negative active material layer in the test region of the sample stage. After that, the sample stage carrying the negative electrode plate was placed in the sample chamber of the SEM-EDS. After closing the chamber, vacuum was applied to 5 × 10-5 mbar, and then the distance from the sample to condenser was adjusted to 8.5 mm. Under high pressure, an appropriate area was selected, and then subjected to focus on and area scant with an appropriate contrast and brightness. The INCA software was used to obtain the mass percentage v of sulfur element contained in the negative electrode active material layer.

The test results of Examples 1 to 22 and Comparative Examples 1 to 2 were shown in Table 2.

**Table 1**

| | Positive electrode plate | | negative electrode plate | | | Electrolyte |
|---|---|---|---|---|---|---|
| | Mass ratio of the first active material to the second active material | Mn content/ wt% | Sulfur-containing compound | Sulfur source | S content /wt% | Fluorine-containing lithium salt additive and its content q/wt% |
| Ex1 | LiNi_{0.8}Co_{0.1}Mn_{0.1}O₂/LiMn₂O ₄ (65/35) | 24.9 | DTD | Electrolyte additive | 0.64 | / |
| Ex2 | LiNi_{0.8}Co_{0.1}Mn_{0.1}O₂/LiMn₂O ₄ (65/35) | 24.9 | 1,3-PS | Electrolyte additive | 0.65 | / |
| Ex3 | LiNi_{0.8}Co_{0.1}Mn_{0.11}O₂/LiMn₂O ₄ (65/35) | 24.9 | MMDS | Electrolyte additive | 0.64 | / |
| Ex4 | LiNi_{0.8}Co_{0.1}Mn_{0.11}O₂/LiMn₂O ₄ (65/35) | 24.9 | PST | Electrolyte additive | 0.65 | / |
| Ex 5 | LiNi_{0.8}Co_{0.1}Mn_{0.11}O₂/LiMn₂O ₄ (65/35) | 24.9 | PCS | Electrolyte additive | 0.64 | / |
| Ex 6 | LiNi_{0.8}Co_{0.1}Mn_{0.1}O₂/LiMn₂O ₄ (65/35) | 24.9 | PES | Electrolyte additive | 0.64 | / |
| Ex 7 | LiNi_{0.8}Co_{0.1}Mn_{0.1}O₂/LiMn₂O ₄ (65/35) | 24.9 | PEGLST | Electrolyte additive | 0.65 | / |
| Ex 8 | LiNi_{0.8}Co_{0.1}Mn_{0.11}O₂/LiMn₂O ₄ (65/35) | 24.9 | TS | Electrolyte additive | 0.64 | / |
| Ex 9 | LiNi_{0.8}Co_{0.1}Mn_{0.11}O₂/LiMn₂O ₄ (65/35) | 24.9 | 1,4-BS | Electrolyte additive | 0.65 | / |
| Ex 10 | LiNi_{0.8}Co_{0.1}Mn_{0.11}O₂/LiMn₂O ₄ (65/35) | 24.9 | DTO | Electrolyte additive | 0.65 | / |
| Ex 11 | LiNi_{0.8}Co_{0.1}Mn_{0.11}O₂/LiMn₂O ₄ (65/35) | 24.9 | DMS | Electrolyte additive | 0.64 | / |
| Ex 12 | LiNi_{0.8}Co_{0.1}Mn_{0.1}O₂/LiMn₂O ₄ (65/35) | 24.9 | DES | Electrolyte additive | 0.65 | / |
| Ex 13 | LiNi_{0.8}Co_{0.1}Mn_{0.1}O₂/LiMn₂O ₄ (65/35) | 24.9 | TS | Negative slurry additive | 0.65 | / |
| Ex 14 | LiNi_{0.8}Co_{0.1}Mn_{0.1}O₂/LiMn₂O ₄ (65/35) | 24.9 | TS | Negative coating agent | 0.66 | / |
| Ex 15 | LiNi_{0.8}Co_{0.1}Mn_{0.1}O₂/LiMn₂O ₄ (65/35) | 24.9 | PST | Electrolyte additive | 0.46 | / |
| Ex 16 | LiNi_{0.8}Co_{0.1}Mn_{0.1}O₂/LiMn₂O ₄ (65/35) | 24.9 | PST | Electrolyte additive | 2.45 | / |
| Ex 17 | LiNi_{0.8}Co_{0.1}Mn_{0.1}O₂/LiMn₂O ₄ (99.5/0.5) | 6.0 | MMDS | Electrolyte additive | 0.31 | / |
| Ex 18 | LiNi_{0.8}Co_{0.1}Mn_{0.1}O₂/LiMn₂O ₄ (28/72) | 44.9 | MMDS | Electrolyte additive | 1.01 | / |
| Ex 19 | LiNi_{0.6}Co_{0.2}Mn_{0.2}O₂/LiMn₂O ₄ (72.5/27.5) | 25.0 | TS | Negative slurry additive | 0.65 | / |
| Ex 20 | LiNi_{0.5}Co_{0.2}Mn_{0.3}O₂/LiMn₂O ₄ (82.5/17.5) | 25.0 | TS | Negative slurry additive | 0.65 | / |
| Ex 21 | LiNi_{1/3}Co_{1/3}Mn_{1/3}O₂/LiMn₂O ₄ (86.5/13.5) | 24.9 | TS | Negative slurry additive | 0.66 | / |
| Ex 22 | LiNi_{0.8}Co_{0.1}Mn_{0.1}O₂/LiMn₂O ₄ (65/35) | 24.9 | DTD | Electrolyte additive | 0.64 | LiDFOP 0.1 |
| CEx 1 | LiNi_{0.8}Co_{0.1}Mn_{0.1}O₂/LiMn₂O ₄ (65/35) | 24.9 | / | / | / | / |
| CEx 2 | LiNi_{0.8}Co_{0.1}Mn_{0.1}O₂/LiMn₂O ₄ (65/35) | 24.9 | PST | Electrolyte additive | 0.45 | / |
| CEx 3 | LiNi_{0.8}Co_{0.1}Mn_{0.1}O₂/LiMn₂O ₄ (65/35) | 24.9 | PST | Electrolyte additive | 2.46 | / |

In above Table 1, the Mn content is the mass percentage of manganese element present in the positive active material; the S content is the mass percentage of sulfur element present in the negative active material layer; the content of fluorine-containing additive is the mass percentage of the fluorine-containing lithium salt type present in the electrolyte.

**Table 2**

| | Thermal shock performance | | Capacity retention (%) after 400 cycles of 1C/1C at 45°C | Capacity retention (%) at 60°C for 30d |
|---|---|---|---|---|
| | Maximum surface temperature /°C | State of battery | | |
| Ex1 | 187.6 | No change | 85.3 | 96.3 |
| Ex2 | 189.3 | No change | 85.1 | 95.7 |
| Ex3 | 188.0 | No change | 85.0 | 95.3 |
| Ex4 | 181.4 | No change | 85.0 | 95.8 |
| Ex 5 | 187.5 | No change | 85.0 | 95.4 |
| Ex 6 | 185.3 | No change | 84.4 | 95.9 |
| Ex 7 | 186.7 | No change | 84.1 | 95.1 |
| Ex 8 | 187.1 | No change | 84.1 | 95.4 |
| Ex 9 | 187.6 | No change | 84.4 | 96.0 |
| Ex 10 | 185.5 | No change | 84.4 | 95.8 |
| Ex 11 | 188.1 | No change | 84.3 | 95.6 |
| Ex 12 | 186.9 | No change | 84.0 | 95.5 |
| Ex 13 | 180.2 | No change | 85.0 | 96.4 |
| Ex 14 | 183.4 | No change | 84.6 | 96.0 |
| Ex 15 | 182.1 | No change | 84.6 | 95.6 |
| Ex 16 | 183.5 | No change | 84.5 | 96.5 |
| Ex 17 | 201.3 | No change | 83.6 | 96.7 |
| Ex 18 | 162.1 | No change | 84.4 | 95.2 |
| Ex 19 | 153.4 | No change | 84.4 | 96.6 |
| Ex 20 | 135.2 | No change | 85.6 | 96.9 |
| Ex 21 | 130.2 | No change | 85.3 | 97.2 |
| Ex 22 | 187.4 | No change | 85.7 | 96.3 |
| CEx 1 | 188.1 | No change | 81.0 | 89.7 |
| CEx 2 | 188.8 | No change | 80.6 | 89.5 |
| CEx 3 | 186.4 | No change | 80.5 | 90.3 |

It can be known from Example 1-22 that, with a lithium manganese-based positive active material, the obtained lithium ion secondary batteries exhibited a low maximum surface temperature and no runaway or ignition occurs when subjected to the thermal shock test. The batteries have a higher safety performance.

After analyzing Examples 1-22 and Comparative Examples 1-3, we found that in the lithium ion secondary batteries of Examples 1-22, the negative active material layer comprises a sulfur-containing solid electrolyte interface film, and the sulfur content in the negative active material layer and the manganese content in the positive active material satisfy the predetermined relationship; in the lithium ion secondary battery of Comparative Example 1, there is no sulfur-containing interface film in the negative active material layer; and in the lithium ion secondary batteries of Comparative Examples 2-3, the negative active material layer comprises a sulfur-containing solid electrolyte interface film, but the sulfur content in the negative active material layer and the manganese content in the positive active material do not satisfy the predetermined relationship. Compared to Comparative Examples 1-3, the lithium ion secondary batteries of Examples 1-22 showed significantly improved capacity retention after 400 cycles of 1C/1C at 45°C and capacity retention at 60°C for 30d. That is to say, the cycle performance and storage performance of the lithium ion secondary batteries are improved, while the lithium ion secondary batteries keep high safety performance.

In Example 1-12, when a sulfur-containing compound in an amount of 0.8 wt% to 1.2 wt% was added to the electrolyte, since the sulfur-containing compound was in a slight excess state, the sulfur content in the sulfur-containing interface film formed was substantially the same and excessive sulfur compounds that did not participate in the formation of the sulfur-containing interface film took part in the cyclic reaction in the electrolyte. When a sulfur-containing compounds was added to the electrolyte in a higher amount, such as in Example 16, the competition mechanism of the chemical reaction that the sulfur-containing compound form a sulfur-containing interface film in the negative active material layer was different, so that the sulfur content in the negative active material layer was increased.

**Table 3**

| | DCR/mΩ |
|---|---|
| Ex1 | 38.1 |
| Ex22 | 35.3 |
| CEx1 | 42.1 |

From the DCR test results as shown in Table 3, it can be seen that the electrolyte of Comparative Example 1 only comprise vinyl carbonate as a film-forming agent and thus the formed SEI film had a relatively high proportion of lithium carbonate inorganic component, and a low ionic conductivity, resulting in its interface film resistance was greater than a sulfur-containing interface film. In Example 1, a sulfur-containing film-forming additive was added, which effectively reduced the proportion of the inorganic component of lithium carbonate, and thus the resistance of the lithium ion secondary battery was significantly decreased. Further, in Example 22, lithium difluorooxalate phosphate was added to the electrolyte on the basis of Example 1, which addition results in an increased ionic conductivity, a further reduced resistance, a decreased discharge polarization, and an improved capacity retention.

In summary, the lithium-ion secondary batteries of the present examples can simultaneously have higher safety performance, storage performance, and cycle performance, and they also have higher safety performance, storage performance, and cycle performance even at high temperatures.

It will be apparent to those skilled in the art that the present application may be modified and varied in accordance with the above teachings. Accordingly, the present application is not limited to the specific embodiments disclosed and described above, and modifications and variations of the present application are intended to be included within the scope of the claims of the present application.

## Claims

1. A lithium ion secondary battery, comprising a positive electrode plate, a negative electrode plate, a separator, and an electrolyte, the positive electrode plate comprising a positive active material layer, and the negative electrode plate comprising a negative active material layer, wherein:
the positive active material layer comprises a lithium manganese-based positive active material as a positive active material;
the negative active material layer and/or electrolyte comprise a sulfur-containing compound so that the sulfur-containing compound forms a sulfur-containing solid electrolyte interface film in the negative active material layer, and the mass percentage v of the sulfur element present in the negative active material layer containing the interface film and the mass percentage u of the manganese element present in the positive active material satisfy the following formula: v = 0.018u + ω, in which u and v both are in wt% and ω is 0.01 ∼ 2; and
the negative active material layer has a compaction density in the range of 1.3 g/cm³∼1.65 g/cm³ and the positive active material layer has a compaction density in the range of 3.0 g/cm³∼3.6 g/cm³.

2. The lithium ion secondary battery according to claim 1, wherein the sulfur-containing compound is selected from one or more of a sulfonate, a sulfate, and a sulfite.

3. The lithium ion secondary battery according to claim 2, wherein the sulfur-containing compound is selected from one or more of 1,3-propane sultone, ethylene sulfate, methylene methanedisulfonate, 1-propene-1,3-sultone, 4-methyl ethylenesulfate, 4-ethyl ethylenesulfate, 4-propyl ethylenesulfate, propylene sulfate, 1,4-butanesultone, ethylene sulfite, dimethyl sulfite and diethyl sulfite.

4. The lithium ion secondary battery according to any one of claims 1 to 3, wherein the electrolyte comprises the sulfur-containing compound and the sulfur-containing compound is present in the electrolyte in an amount of 2.5% by weight or less.

5. The lithium ion secondary battery according to any one of claims 1 to 4, wherein the negative active material layer comprises the sulfur-containing compound and the sulfur-containing compound is present in the negative active material layer in an amount of 2% by weight or less.

6. The lithium ion secondary battery according to any one of claims 1 to 5, wherein the manganese element is present in the positive active material in an amount of 6 wt% to 45 wt%.

7. The lithium ion secondary battery according to any one of claims 1 to 6, wherein the electrolyte comprises a fluorine-containing lithium salt as an additive and the fluorine-containing lithium salt is selected from one or more of lithium difluorophosphate LiPO₂F₂, lithium difluorooxalate phosphate LiDFOP, lithium tetrafluoroborate LiBF₄, and lithium difluorooxalate borate LiDFOB;
preferably, the fluorine-containing lithium salt is present in the electrolyte in an amount of 0.05 wt% to 1.5 wt%.

8. The lithium ion secondary battery according to any one of claims 1 to 7, wherein the positive active material comprises a first positive active material represented by formula (1) and a second positive active material represented by formula (2):
Li₁₊ₓNiₐCo_{b}M_{1-a-b}O_{2-y}A_{y} (1)
in which formula (1), -0.1≤x≤0.2, 0 <a <1, 0≤b <1, 0 <a + b <1, 0≤y <0.2, M is one or more of Mn, Fe, Cr, Ti, Zn, V, Al, Zr, and Ce, and A comprises one or more of S, N, F, Cl, Br, and I;
preferably 0.5≤a <1, 0<b <0.5, 0.7≤a + b <1, 0≤y <0.1, M is one or two of Mn and Al, and A is one or two of S or F, and
Li_{1+z}Mn_{c}M'_{2-c}O_{4-d}A'_{d} (2)
in which formula (2), -0.1≤z≤0.2, 0 <c≤2, 0≤d <1, M' comprises one or more of Ni, Fe, Cr, Ti, Zn, V, Al, Mg, Zr, and Ce, and A' comprises one or more of S, N, F, Cl, Br, and I.

9. A lithium ion secondary battery, comprising a positive electrode plate, a negative electrode plate, a separator, and an electrolyte, wherein:
the positive electrode plate comprising a positive active material layer, and the positive active material layer comprises a lithium manganese-based positive active material as a positive active material;
the negative electrode plate comprising a negative active material layer, and the negative active material layer comprises a negative active material whose surface is covered with a sulfur-containing solid electrolyte interface film and the mass percentage v of the sulfur element present in the negative active material layer and the mass percentage u of the manganese element present in the positive active material satisfy the following formula: v = 0.018u + ω, in which u and v both are in wt% and ω is 0.01 ∼ 2; and
the negative active material layer has a compaction density in the range of 1.3 g/cm³∼1.65 g/cm³ and the positive active material layer has a compaction density in the range of 3.0 g/cm³∼3.6 g/cm³.

## Patentansprüche

1. Lithium-Ionen-Sekundärbatterie, umfassend eine Positivelektrodenplatte, eine Negativelektrodenplatte, einen Separator und einen Elektrolyten, wobei die Positivelektrodenplatte eine positivelektrodenaktive Materialschicht umfasst und die Negativelektrodenplatte eine negativelektrodenaktive Materialschicht umfasst, wobei:
die positivelektrodenaktive Materialschicht ein positivelektrodenaktives Material auf Lithium-Mangan-Basis als positivelektrodenaktives Material umfasst;
die negativelektrodenaktive Materialschicht und/oder der Elektrolyt eine schwefelhaltige Verbindung umfassen/umfasst, so dass die schwefelhaltige Verbindung einen schwefelhaltigen Festelektrolyt-Grenzflächenfilm in der negativelektrodenaktiven Materialschicht bildet, und der Massenprozentsatz v des Schwefelelements in der den Grenzflächenfilm enthaltenden negativelektrodenaktiven Materialschicht und der Massenprozentsatz u des im positivelektrodenaktiven Material vorhandenen Manganelements die folgende Formel: v = 0,018u + ω erfüllt, wobei u und v beide in Gew .-% sind und ω 0,01 bis 2 ist; und
die negativelektrodenaktive Materialschicht eine Verdichtungsdichte im Bereich von 1,3 g/cm³ bis 1,65 g/cm³ aufweist und die positivelektrodenaktive Materialschicht eine Verdichtungsdichte im Bereich von 3,0g/cm³ bis 3,6g/cm³ aufweist.

2. Lithium-Ionen-Sekundärbatterie nach Anspruch 1, wobei die schwefelhaltige Verbindung aus einem oder mehreren von Sulfonat, Sulfat und Sulfit ausgewählt ist.

3. Lithium-Ionen-Sekundärbatterie nach Anspruch 2, wobei die schwefelhaltige Verbindung aus einem oder mehreren von 1,3-Propansulton, Ethylensulfat, Methylenmethandisulfonat, 1-Propen-1,3-Sultan, 4-Methylethylensulfat, 4-Ethylethylensulfat, 4-Propylethylensulfat, Propylensulfat, 1,4-Butansulton, Ethylensulfit, Dimethylsulfit und Diethylsulfit ausgewählt ist.

4. Lithium-Ionen-Sekundärbatterie nach einem der Ansprüche 1 bis 3, wobei der Elektrolyt die schwefelhaltige Verbindung umfasst und die schwefelhaltige Verbindung in einer Menge von 2,5 Gew .-% oder weniger im Elektrolyten vorliegt.

5. Lithium-Ionen-Sekundärbatterie nach einem der Ansprüche 1 bis 4, wobei die negativelektrodenaktive Materialschicht die schwefelhaltige Verbindung umfasst und die schwefelhaltige Verbindung in einer Menge von 2 Gew .-% oder weniger in der negativelektrodenaktiven Materialschicht vorliegt.

6. Lithium-Ionen-Sekundärbatterie nach einem der Ansprüche 1 bis 5, wobei das Manganelement in dem positivelektrodenaktiven Material in einer Menge von 6 Gew .-% bis 45 Gew .-% vorliegt.

7. Lithium-Ionen-Sekundärbatterie nach einem der Ansprüche 1 bis 6, wobei der Elektrolyt ein fluorhaltiges Lithiumsalz als Additiv umfasst und das fluorhaltige Lithiumsalz aus einem oder mehreren von Lithiumdifluorophosphat LiPO₂F₂, Lithiumdifluoroxalatphosphat LiDFOP, Lithiumtetrafluorborat LiBF₄ und Lithiumdifluoroxalatborat LiDFOB ausgewählt ist;
vorzugsweise das fluorhaltige Lithiumsalz in einer Menge von 0,05 Gew .-% bis 1,5 Gew .-% im Elektrolyten vorliegt.

8. Lithium-Ionen-Sekundärbatterie nach einem der Ansprüche 1 bis 7, wobei das positivelektrodenaktive Material ein erstes positivelektrodenaktives Material, das durch Formel (1) dargestellt ist, und ein zweites positivelektrodenaktives Material, das durch Formel (2) dargestellt ist, umfasst:
Li₁₊ₓNiₐCo_{b}M_{1-a-b}O_{2-y}A_{y} (1)
in Formel (1) -0,1≤x≤0,2, 0 <a <1, 0≤b <1, 0 <a + b <1, 0≤y <0,2, M eines oder mehrere von Mn, Fe, Cr, Ti, Zn, V, Al, Zr und Ce ist und A eines oder mehrere von S, N, F, Cl, Br und I umfasst; vorzugsweise 0,5≤a <1, 0<b<0,5, 0,7≤a + b<1, 0≤y <0,1, M eins oder zwei von Mn und Al ist und A eins oder zwei von S oder F ist, und
Li_{1+z}Mn_{c}M'_{2-c}O_{4-d}A'_{d} (2)
in der Formel (2) -0,1≤z≤0,2, 0<c≤2, 0≤d <1, M' eines oder mehrere von Ni, Fe, Cr, Ti, Zn, V, Al, Mg, Zr und Ce umfasst und A' eines oder mehrere von S, N, F, Cl, Br und I umfasst.

9. Lithium-Ionen-Sekundärbatterie, umfassend eine Positivelektrodenplatte, eine Negativelektrodenplatte, einen Separator und einen Elektrolyten, wobei:
die Positivelektrodenplatte eine positivelektrodenaktive Materialschicht umfasst und die positivelektrodenaktive Materialschicht ein positivelektrodenaktives Material auf Lithium-Mangan-Basis als positivelektrodenaktives Material umfasst;
die Negativelektrodenplatte eine negativelektrodenaktive Materialschicht umfasst und die negativelektrodenaktive Materialschicht ein negativelektrodenaktives Material umfasst, dessen Oberfläche mit einem schwefelhaltigen Festelektrolyt-Grenzflächenfilm bedeckt ist, und der Massenprozentsatz v des in der negativelektrodenaktiven Materialschicht vorhandenen Schwefelelements und der Massenprozentsatz u des im positivelektrodenaktiven Material vorhandenen Manganelements die folgende Formel: v = 0,018u + ω erfüllt, wobei u und v beide in Gew .-% sind und ω 0,01 bis 2 ist; und
die negativelektrodenaktive Materialschicht eine Verdichtungsdichte im Bereich von 1,3 g/cm³ bis 1,65 g/cm³ aufweist und die positivelektrodenaktive Materialschicht eine Verdichtungsdichte im Bereich von 3,0 g/cm³ bis 3,6 g/cm³ aufweist.

## Revendications

1. Batterie secondaire au lithium-ion, comprenant une plaque d'électrode positive, une plaque d'électrode négative, un séparateur et un électrolyte, la plaque d'électrode positive comprenant une couche de matériau actif positif et la plaque d'électrode négative comprenant une couche de matériau actif négatif, dans laquelle :
la couche de matériau actif positif comprend un matériau actif positif à base de lithium-manganèse comme matériau actif positif ;
la couche de matériau actif négatif et/ou l'électrolyte comprennent un composé contenant du soufre qui peut former un film d'interface d'électrolyte solide contenant du soufre dans la couche de matériau actif négatif, et le pourcentage en masse v de l'élément soufre présentant dans la couche de matériau actif négatif contenant le film d'interface et le pourcentage en masse u de l'élément manganèse présentant dans le matériau actif positif satisfont à la formule suivante : v = 0,018u + ω, où u et v sont chacun exprimé en % en poids et ω est égal à 0,01 - 2 ; et
la couche de matériau actif négatif présente une densité tassée comprise dans une gamme de 1,3 g/cm³ à 1,65 g/cm³ et la couche de matériau actif positif présente une densité tassée dans une gamme de 3,0 g/cm³ à 3,6 g/cm³.

2. Batterie secondaire au lithium-ion selon la revendication 1, dans laquelle le composé contenant du soufre est un ou plusieurs choisis parmi le sulfonate, le sulfate et le sulfite.

3. Batterie secondaire au lithium-ion selon la revendication 2, dans laquelle le composé contenant du soufre est un ou plusieurs choisis parmi 1,3-propane sultone, sulfate d'éthylène, méthylène méthanedisulfonate, 1-propène-1,3-sultone, 4-méthyl éthylènesulfate, 4-éthyl éthylènesulfate, 4-propyl éthylènesulfate, sulfate de propylène, 1,4-butanesultone, sulfite d'éthylène, sulfite de diméthyle et sulfite de diéthyle.

4. Batterie secondaire au lithium-ion selon l'une quelconque des revendications 1 à 3, dans laquelle l'électrolyte comprend le composé contenant du soufre et le pourcentage du composé contenant du soufre dans l'électrolyte est de 2,5% en poids ou moins.

5. Batterie secondaire au lithium-ion selon l'une quelconque des revendications 1 à 4, dans laquelle la couche de matériau actif négatif comprend le composé contenant du soufre et le pourcentage du composé contenant du soufre dans la couche de matériau actif négatif est de 2% en poids ou moins.

6. Batterie secondaire au lithium-ion selon l'une quelconque des revendications 1 à 5, dans laquelle le pourcentage de l'élément manganèse dans le matériau actif positif est de 6% à 45% en poids.

7. Batterie secondaire au lithium-ion selon l'une quelconque des revendications 1 à 6, dans laquelle l'électrolyte comprend un sel de lithium contenant du fluor comme additif, le sel de lithium contenant du fluor étant un ou plusieurs choisis parmi difluorophosphate de lithium LiPO₂F₂, phosphate de difluorooxalate de lithium LiDFOP, tétrafluoroborate de lithium LiBF₄ et borate de difluorooxalate de lithium LiDFOB ;
de préférence, le pourcentage du sel de lithium contenant du fluor dans l'électrolyte est de 0,05 % à 1,5 % en poids.

8. Batterie secondaire au lithium-ion selon l'une quelconque des revendications 1 à 7, dans laquelle le matériau actif positif comprend un premier matériau actif positif ayant la formule chimique (1) et un deuxième matériau actif positif ayant la formule chimique (2) :
Li₁₊ₓNiₐCo_{b}M_{1-a-b}O_{2-y}A_{y} (1)
où, -0,1 ≤ x ≤ 0,2, 0 < a < 1, 0 ≤ b < 1, 0< a+b < 1, 0 ≤ y < 0,2, et M est un ou plusieurs choisis parmi Mn, Fe, Cr, Ti, Zn, V, Al, Zr et Ce ; et A comprend un ou plusieurs choisis parmi S, N, F, Cl, Br et I ;
de préférence, 0.5 ≤ a < 1, 0 < b < 0.5, 0.7 ≤ a + b < 1, 0 ≤ y < 0.1, et M est un ou deux de Mn et Al, et A est un ou deux de S et F, et
Li_{1+z}Mn_{c}M'_{2-c}O_{4-d}A'_{d} (2)
où, -0,1 ≤ z ≤ 0,2, 0 < c ≤ 2, 0 ≤ d < 1, M' comprend un ou plusieurs choisis parmi Ni, Fe, Cr, Ti, Zn, V, Al, Mg, Zr et Ce, et A' comprend un ou plusieurs choisis parmi S, N, F, Cl, Br et I.

9. Batterie secondaire au lithium-ion, comprenant une plaque d'électrode positive, une plaque d'électrode négative, un séparateur et un électrolyte, dans laquelle :
la plaque d'électrode positive comprend une couche de matériau actif positif, et la couche de matériau actif positif comprend un matériau actif positif à base de lithium-manganèse comme matériau actif positif ;
la plaque d'électrode négative comprend une couche de matériau actif négatif, la couche de matériau actif négatif comprend un matériau actif négatif dont la surface est couverte d'un film d'interface d'électrolyte solide contenant du soufre, et le pourcentage en masse v de l'élément soufre présentant dans la couche de matériau actif négatif et le pourcentage en masse u de l'élément manganèse présentant dans le matériau actif positif satisfont à la formule suivante : v = 0,018u + ω, où u et v sont chacun exprimé en % en poids et ω est égal à 0,01 - 2 ; et
la couche de matériau actif négatif présente une densité tassée comprise dans une gamme de 1,3 g/cm³ à 1,65 g/cm³ et la couche de matériau actif positif présente une densité tassée dans une gamme de 3,0 g/cm³ à 3,6 g/cm³.
